# EUROPÄISCHE PATENTSCHRIFT

(11) **EP 2 647 317 B1**
(45) Veröffentlichungstag und Bekanntmachung des Hinweises auf die Patenterteilung: **26.11.2014**
(21) Anmeldenummer: 12405034.5
(22) Anmeldetag: 05.04.2012
(51) Int. Cl.: A47J 31/36

(54) **Verfahren und Zubereitungssystem zum Zubereiten eines Brüherzeugnisses**
Method and preparation system for preparing a brewed product
Procédé et système de préparation destinés à la préparation d'un produit ébouillanté

(43) Veröffentlichungstag der Anmeldung: 09.10.2013
(60) Teilanmeldung: 14158620.6
(73) Patentinhaber: Luna Technology Systems LTS GmbH, 8304 Wallisellen (CH)
(72) Erfinder: Deuber, Louis, 8805 Richterswil (CH)
(74) Vertreter: Frei, Alexandra Sarah

(56) Entgegenhaltungen:
- WO-A1-2009/090201
- WO-A2-2010/118545
- US-B2- 7 946 217

## Beschreibung

Die Erfindung betrifft die Zubereitung von Getränken oder dergleichen aus einem in einer Kapsel enthaltenen Extraktionsgut, beispielsweise gemahlenem Kaffee. Sie betrifft insbesondere ein Brühverfahren für ein Brüherzeugnis.

Extraktionsgeräte zum Zubereiten von Getränken aus einem in einer Portionsverpackung vorhandenen Extraktionsgut sind beispielsweise als Kaffee- oder Espressomaschinen bekannt und erfreuen sich nach wie vor steigender Beliebtheit. In vielen entsprechenden Systemen sind die Portionsverpackungen als Kapseln ausgebildet, in denen das Extraktionsgut bspw. luftdicht abgeschlossen ist. Für die Extraktion wird die Kapsel an zwei einander gegenüberliegenden Seiten angestochen. Auf der ersten Seite wird eine Brühflüssigkeit - im Allgemeinen heisses Wasser - eingeleitet. Auf der zweiten Seite wird das Brüherzeugnis aus der Kapsel ausgeleitet. Je nach zuzubereitendem Getränk und System muss dabei im Innern der Kapsel ein erheblicher Druck von beispielsweise 5-20 bar herrschen.

Als Kapselmaterialien sind insbesondere Aluminium und Kunststoffe, bspw. Polypropylen bekannt geworden. Aluminiumkapseln bringen eine sehr gute Haltbarkeit (Aromaschutz) des Extraktionsguts, sind aber in der Herstellung sehr energieaufwändig. Polypropylenkapseln sind betreffend Energieaufwand und Entsorgung vorteilhaft, stellen aber erhöhte Anforderungen an den Anstechmechanismus und den Aromaschutz.

Auf dem Markt sind sowohl Kapseln mit integrierten Filtermitteln erhältlich als auch Kapseln die lediglich eine das Extraktionsgut umschliessende Hülle aufweisen, und für die also der Anstechmechanismus so ausgebildet sein muss, dass nicht in unerwünschter Weise Extraktionsgut zusammen mit dem Brüherzeugnis aus der Kapsel abgeführt werden kann.

Die US 7 946 217 B2 beschreibt ein Brühverfahren mit Kapsel.

Aus der WO 2010/118543 ist eine Kaffee-Portionenkapsel bekannt, welche näherungsweise eine Würfelform aufweist und im Unterschied zu den bekannten becherförmigen Kapseln keinen auf der Ebene der einen (oberseitigen) Deckfläche umlaufenden Kragen aufweist. Ein solcher umlaufender Kragen wird bei Kapselsystemen gemäss dem Stand der Technik benötigt, erstens um die Kapsel beim Einwurf in die Kaffeemaschine zu führen und nach dem Einwurf in einer Zwischenposition zu halten. Zweitens wird ein solcher Kragen zum Verschliessen der Kapsel durch Ultraschallschweissen oder thermisches Versiegeln durch einen flachen Deckel (der auch als Folie ausgebildet sein kann) benötigt. Beim Verschliessen mittels Ultraschallschweissen braucht es den Kragen, um einen Energierichtungsgeber unterzubringen. Wird die Kapsel durch thermisches Versiegeln verschlossen, ist der Kragen nötig, damit der Deckel auf einer genügend grossen Fläche aufliegt. Im Gegensatz dazu wird gemäss WO 2010/118543 ein gewölbter Deckel verwendet, und das Verschliessen erfolgt mittels Ultraschall-Trennschweissen. Die gemäss der Lehre der WO 2010/118543 hergestellte Kapsel hat demnach unabhängig von ihrer ("Würfel"-)Form anstelle eines Kragens eine zwischen den durch die Deckfläche definierten Ebenen umlaufende Schweissbraue, deren Ausdehnung/seitliches Vorstehen im Vergleich zum bekannten Kragen deutlich reduziert ist und eine nur unwesentliche Abweichung von der körperhaften - bspw. würfelartigen - Form der Kapsel darstellt.

Aus der WO 2010/118544 sind ausserdem Vorrichtungen zum Ausleiten eines Brüherzeugnisses aus einer Portionenkapsel sowie zum Einleiten einer Brühflüssigkeit in eine Portionenkapsel bekannt. Diese Vorrichtungen weisen von einer Auflagefläche weg ragende Perforationselemente auf. Das Einleiten bzw. Ausleiten folge an diesen Perforationselementen vorbei und nicht durch diese hindurch. Den Perforationselementen können ausserdem Rückhaltestege zugeordnet sein, die eine nicht schneidende Kante aufweisen, welche ein Anliegen einer Wandung der Kapsel an der Auflagefläche in einer Umgebung des Rückhaltestegs verhindert, indem die Wandung der Kapsel an der Kante anliegt.

Für ein qualitativ hochwertiges Brühgetränk ist es oft wichtig, dass das Extraktionsgut während des Brühprozesses kompakt ist und nicht verwirbelt. Es stellt sich jedoch oft das Problem, dass aus herstellungstechnischen Gründen und/oder aufgrund einer vorgegebenen Kapsel-Dimensionierung und Füllmenge das Extraktionsgut in der Kapsel nicht beliebig komprimiert werden kann.

In der WO 2008/015642 wird vorgeschlagen, in einer Kapsel beim Einfüllen das Extraktionsgut zu einer Tablette komprimieren und die Kapsel anschliessend unter Vakuumbedingungen zu verschliessen, so dass der Kapseldeckel nach dem Verschliessen auf die Oberfläche der Kapsel gedrückt wird und dort haftet. Nachteilig an dieser Lösung ist dass trotz dem im Kapselinnern herrschenden Vakuum sich das Extraktionsgut beim Transport wieder lockern kann und die Tablette im Innern der Kapsel keinen Bestand hat.

Aus der WO 2010/118545 ist ausserdem ein System bekannt, bei welchem die Kapsel während des Brühvorgangs durch seitlich angreifende Anpressbolzen komprimiert wird. Diese an sich gut funktionierende Lösung hat jedoch die Nachteile, dass sie zusätzliche mechanische Teile erfordert, und dass je nach Brühkammerkonstruktion die von aussen in die Brühkammer eingreifenden Bolzen aus geometrischen Gründen schwierig unterzubringen sind.

Es ist demnach eine Aufgabe der Erfindung, Lösungsansätze zur vorstehend diskutierten Problematik zur Verfügung zu stellen. Diese sollten insbesondere einen Brühvorgang unter Kompressionsbedingungen ermöglichen, und zwar auch in Situationen, in denen die Kapsel nicht vollständig mit komprimiertem Extraktionsgut befüllt werden kann oder aus anderen Gründen nicht vollständig befüllt wird.

Diese Aufgabe wird gelöst durch die Erfindung, wie sie in den Patentansprüchen definiert ist.

Gemäss einem Aspekt betrifft die Erfindung ein Brühverfahren, bei aus einer in eine Kapsel eingeleitete Brühflüssigkeit (insbesondere heisses Wasser) in einem Extraktionsprozess ein Brüherzeugnis (insbesondere ein heisses Getränk) erzeugt wird, mit folgenden Schritten:
- zur-Verfiigung-Stellen der Kapsel als eine geschlossene Kapsel mit einer Kapselwand, die eine extraktionsseitigen Deckfläche, eine injektionsseitige Deckfläche und eine umlaufende, sich zwischen der extraktionsseitigen Deckfläche und der injektionsseitigen Deckfläche erstreckende Mantelfläche aufweist, sowie mit einem von der Kapselwand umgebenen Extraktionsgut im Innern der Kapsel;
- Einbringen der Kapsel in ein Brühmodul einer Maschine zum Zubereiten des Brüherzeugnis, welches Brühmodul einen Injektor zum Einleiten einer Brühflüssigkeit in die Kapsel und eine Ausleitvorrichtung zum Ausleiten eines Brüherzeugnisses aufweist, wobei der Injektor mindestens ein von einer injektionsseitigen Auflagefläche weg ragendes injektionsseitiges Perforationselement und die Ausleitvorrichtung mindestens ein von einer extraktionsseitigen Auflagefläche weg ragendes extraktionsseitiges Perforationselement aufweist,

- Schliessen einer Brühkammer des Brühmoduls, so weit, bis sich die Kapsel in der Brühkammer befindet, die umlaufende Mantelfläche der Kapsel injektionsseitig durch eine Kapseldichtung (43) umgriffen wird, und das mindestens eine injektionsseitige Perforationselement die injektionsseitige Deckfläche entlang einer (bspw. zweidimensionalen) Schnittlinie ansticht, beispielsweise so dass mindestens ein injektionsseitiger Lappen der injektionsseitigen Deckfläche entsteht,
- Einleiten einer Brühflüssigkeit in den Bereich zwischen die injektionsseitige Auflagefläche und die injektionsseitige Deckfläche der Kapsel unter Druck, so, dass durch den Flüssigkeitsdruck die injektionsseitige Deckfläche zum Kapselinnern hin gedrückt wird und sich mindestens teilweise zum Kapselinnern hin verschiebt, während die umgreifende Kapseldichtung die umlaufende Mantelfläche hält, und so dass Brühflüssigkeit an mindestens einer ins Kapselinnere gedrückten injektionsseitigen Partie der Kapselwand - bspw. gegebenenfalls dem Lappen - vorbei ins Kapselinnere gelangt, und
- Aufrechterhalten des Drucks auf die Brühflüssigkeit mindestens so lange, bis das Brüherzeugnis aus in der extraktionsseitigen Deckfläche durch Anstechen durch das mindestens eine extraktionsseitige Perforationselement erzeugten Ausleitöffnungen austritt.

Die Verschiebung der injektionsseitigen Deckfläche unter dem Druck kann bspw. eine parallele Verschiebung einer zentralen Partie der injektionsseitigen Deckfläche sein, oder eine Wölbung der injektionsseitigen Deckfläche gegen das Kapselinnere. Auch Mischformen mit sich wölbenden und eben bleibenden, parallel verschobenen Bereichen sind möglich.

Eine zweidimensionale Schnittlinie entsteht dann, wenn das Perforationselement weder in der Art einer dünnen Nadel lediglich punktförmig perforiert noch lediglich eine einzige, gerade (eindimensionale) Schnittlinie erzeugt, sondern wenn die Projektion des Perforationselements auf die Auflagefläche (und damit auch die Schnittlinie) eine Fläche aufspannt und das Perforationselement eine gebogene oder gewinkelte Form hat oder aus mehreren, bspw. im Winkel zu einander stehenden Teilstücken aufgebaut ist. Insbesondere kann das Perforationselement ein von der Auflagefläche bspw. ungefähr senkrecht abstehendes ebenes Element, insbesondere Blech aufweisen, (wobei der Begriff Blech keine Einschränkung der Materialwahl darstellt und entsprechend geformte, ebene Elemente auch aus Kunststoff mit einschliesst) welches gekrümmt, geknickt (z.B. abgekantet) oder aus mehreren in einem Winkel zueinander stehenden Blechstücken zusammengesetzt ist. Alternativ zur zweidimensionalen Schnittlinie kann auch eine eindimensionale Schnittlinie in Kombination mit einem zu dieser in einem Winkel stehenden Rückhaltesteg verwendet werden, der ein fischmaulartiges Öffnen der durch die Schnittlinie angeschnittenen Kapselwand bewirkt.

Die Erfindung beruht demnach unter anderem auf dem Ansatz, dass die Brühflüssigkeit selbst zum Komprimieren der Kapsel genutzt wird, während die Kapsel durch ein elastisches Mittel, nämlich die umgreifende Kapseldichtung gehalten wird. Dieser Ansatz macht sich unter anderem zunutze, dass Möglichkeiten zur plastischen Verformung der Kapsel bei Kapseln mit Kunststoffwänden auch von der Temperatur abhängen und die Brühflüssigkeit bei Brühprozessen im Allgemeinen heiss (mindestens 80° oder mindestens 90°, bspw. bis zum Siedepunkt (100° auf Meereshöhe) oder bis 95°) in die Kapsel eingeleitet wird. Nach einer plastischen Verformung bleibt die Kapsel im komprimierten Zustand auch dann, wenn sich der Druck zwischen der Kapselaussenseite (injektionsseitig) und dem Kapselinneren im Wesentlichen ausgeglichen hat. Besonders günstig wirkt daher das Verfahren im Zusammenhang mit Kapseln, deren Wand eine Glasübergangstemperatur von nur wenig unter der Raumtemperatur oder gar darüber haben, wodurch der Schritt von Raumtemperatur zur Brühtemperatur besonders ins Gewicht fällt und die plastische Verformbarkeit stark beeinflusst. Insbesondere ist die Glasübergangstemperatur der Kapsel zwischen -50° und 50°, insbesondere zwischen -30° und 20°, im Speziellen zwischen -20° und 5° (alle Temperaturangaben in °C).

Die Wandstärke einer Kunststoff-Kapselwand kann bspw. zwischen 0.2 mm und 0.4 mm, insbesondere. zwischen 0.25 mm und 0.35 mm liegen, was die Verwendung von tiefgezogenen Kapselwänden ermöglicht. Als Material kommt bspw. Polypropylen in Frage, aber auch andere Kunststoffe, insbesondere - aber nicht ausschliesslich - mit Glasübergangstemperaturen im vorstehend angegebenen Bereich.

Eine Anwendung für andere Materialien, auch Nicht-Kunststoffe, ist jedoch nicht ausgeschlossen.

Die Perforationselemente sind im Allgemeinen frei von im Wesentlichen axial durch die Perforationselemente verlaufenden Durchleitkanälen (axial bezeichnet hier die Richtung senkrecht zur Auflagefläche). Sie dienen lediglich der Perforation der Kapsel. Das Einleiten und Ausleiten der Flüssigkeiten aus der Kapsel erfolgt an den Perforationselementen vorbei, was wie nachstehend noch eingehender erläutert wird. Die Perforationselemente selbst können daher relativ einfache, ungeschlitzte und kompakte, öffnungslose Elemente sein, und bspw. blechartig (metallisch oder aus Kunststoff) ausgebildet sein.

Besonders günstig ist, wenn mindestens die extraktionsseitigen und bspw. auch die injektionsseitigen Perforationselemente je einen nicht schneidenden Rückhaltesteg aufweisen, dessen axiale Ausdehnung kleiner ist als die axiale Ausdehnung einer schneidenden und/oder perforierenden Partie des entsprechenden Perforationselements. Beim Perforieren wird die schneidende Partie daher zunächst eine zweidimensionale (d.h. nicht lediglich eine Gerade darstellende) Schnittlinie bilden, die aber durch die schneidende Partie (bspw. blechartig ausgebildete Elemente) gleich wieder verschlossen wird. Beim weiteren Eindringen der Perforationselemente in das Kapselinnere wird bspw. durch die entsprechenden Rückhaltestege ein Materiallappen angehoben, so dass sich für die Flüssigkeit eine Öffnung bildet.

Das Brühmodul und die Kapsel können so dimensioniert sein, dass der Abstand zwischen der injektionsseitigen Deckfläche und der extraktionsseitigen Deckfläche der Kapsel ungefähr dem Abstand zwischen der injektionsseitigen und der extraktionsseitigen Auflagefläche bei geschlossener Brühkammer entspricht oder kleiner ist als dieser, so dass - bspw. unter anderem aufgrund der elastischen Kapselverformung beim Anstehen der Perforationselemente aufgrund des Widerstands, den das Kunststoffmaterial dem Schneiden der Perforationselemente entgegenbringt - vor dem Einleiten der Brühflüssigkeit die Deckflächen nicht beide an den Auflageflächen anliegen. So bleibt auch bei geschlossener Brühkammer injektionsseitig und/oder extraktionsseitig ein Zwischenraum zwischen der jeweiligen Auflagefläche und der entsprechenden Deckfläche der Kapsel. Die Perforationselemente dringen dann auch nicht vollständig bis zum Anschlag in die Kapsel ein.

Insbesondere kann das Anstechen so geschehen, dass ein injektionsseitiger Lappen der Deckfläche ins Kapselinnere drückbar ist (bspw., wenn vorhanden, durch einen entsprechenden Rückhaltesteg und/oder durch den von aussen einwirkenden Druck der Brühflüssigkeit), dass die Kapsel jedoch mindestens mit ihrer extraktionsseitigen Deckfläche nicht ganz an der extraktionsseitigen Anlagefläche anliegt, d.h. sie ist von dieser beabstandet; der Abstand entspricht bspw. zwischen 30% und 100% der Höhe der extraktionsseitigen Perforationselemente.

Dann kann das Verfahren so durchgeführt werden, dass durch das Einleiten der Brühflüssigkeit ein Druck im Kapselinnern so lange aufgebaut wird, bis die extraktionsseitige Deckfläche durch den in der Kapsel aufgebauten Innendruck zur extraktionsseitigen Auflagefläche hin verschoben wird, wobei durch die extraktionsseitigen Perforationselemente Ausleitöffnungen in der Kapsel erzeugt oder vergrössert werden, durch welche das Brüherzeugnis aus der Kapsel ausleitbar ist.

Schon beim Schritt des Schliessens der Brühkammer kann jedoch optional auch bei dieser Variante des erfindungsgemässen Verfahrens extraktionsseitig ein Anstechen erfolgen. Insbesondere können die extraktionsseitigen Perforationselemente so weit in die Kapsel hinein ragen, dass schlitzartige Anstechöffnungen entstehen, die aber durch die Perforationselemente selbst geschlossen werden, so dass durch diese Anstechöffnungen das Brüherzeugnis nur erschwert auslaufen kann. Nach Aufbau des Innendrucks wird dann die extraktionsseitige Deckfläche bspw. so weit gegen die Perforationselemente gepresst, dass Rückhaltestege der Perforationselemente jeweils einen extraktionsseitigen Lappen der extraktionsseitigen Deckfläche ins Kapselinnere drücken, so dass die Ausleitöffnungen entstehen.

Das Vorgehen nach dieser Ausführungsform verbessert demnach die Möglichkeiten, im Innern der Kapsel einen grossen Innendruck aufzubauen. Es ergibt sich ein Vorbrühprozess im komprimierten Kaffeepulver. Ein Vorbrühprozess ist beispielsweise von vollautomatischen Kaffeemaschinen mit Mahlwerk bekannt und wird dort bewusst angestrebt, indem der gemahlene Kaffee zunächst mit mechanischen Mitteln komprimiert wird, worauf Brühflüssigkeit eingeleitet wird, bis das komprimierte Kaffeepulver getränkt ist, worauf die Zufuhr von Brühflüssigkeit für einige Zeit (Sekundenbruchteile bis wenige Sekunden) gestoppt wird, und erst dann der eigentliche Brühvorgang einsetzt. Während es beim erfindungsgemässen Vorgehen nicht ausgeschlossen ist, die Zufuhr der Brühflüssigkeit durch eine entsprechende Steuerung gezielt zu unterbrechen, ist solches aufgrund der erfindungsgemässen Massnahmen gar nicht unbedingt nötig für den Vorbrühprozess.

Die (injektionsseitige) Kapseldichtung wird im Allgemeinen aus einem flexiblen, elastisch verformbaren, insbesondere gummielastischen und/oder elastomeren Material gefertigt sein. Sie kann insbesondere die Kapsel entlang der umlaufenden Mantelfläche umgreifen und dabei durch ihre Elastizität gegen die Kapselwand gedrückt werden, derart, dass die Kapsel durch die Kapseldichtung gehalten wird.

Insbesondere wird die Kapseldichtung mit Vorteil so dimensioniert und auf die Kapsel abgestimmt sein, dass ein umlaufendes Dichtungsmerkmal (insbesondere eine Dichtungslippe oder ein Dichtungswulst) das so weit radial nach innen ragt, dass die umlaufende Mantelfläche beim Schliessen der Brühkammer lokal deformiert und entlang des Dichtungsmerkmals gegen innen verschoben wird. D.h. es findet nicht nur ein Drücken (Kraft Ausüben) aufgrund der Elastiztität der Dichtung gegen die Wand statt, sondern das Dichtungsmerkmal ragt so weit nach innen, dass eine Deformation auch der Kapsel stattfindet - es werden mindestens temporär dem Dichtungsmerkmal entsprechende Merkmale an der Kapselwand eingeformt - bspw. eine einer Dichtungslippe/einem Dichtungswulst entsprechende Rille bzw. bei mehreren solchen Merkmal eine entsprechende Mehrzahl von Rillen.

Brühtemperatur, Kapselwandmaterial und Dimensionierungen können insbesondere so aufeinander abgestimmt sein, dass diese Deformation plastisch ist und während und nach dem Brühprozess bleibt, was wie nachstehend erwähnt eine besondere stabilisierende Wirkung haben kann.

Die radiale, durch die Kapseldichtung bewirkte Verformung kann ausserdem eine zusätzliche leichte Verdichtung der Kapselfüllung mit sich bringen, was ebenfalls günstig sein kann.

Besonders günstig kann sein, wenn die injektionsseitige Kapseldichtung eine Mehrzahl von umlaufenden Dichtungslippen und/oder Dichtungswülsten aufweist, die aufgrund ihrer Elastizität die Kapselwand gegen ein Kapselinneres drücken, wobei zwischen aufeinander folgenden Dichtungslippen bzw. Dichtungswülsten jeweils eine Vertiefung angeordnet ist, derart, dass im Betriebszustand zwischen den aufeinander folgenden Dichtungslippen bzw. Dichtungswülsten und der Kapsel ein umlaufender Hohlraum gebildet wird.

Wenn die Materialeigenschaften der Kapsel - bspw. durch Wahl eines Materials mit einer wie vorstehend diskutiert gewählten Glasübergangstemperatur, eines Brühdrucks von zwischen 8 und 20 bar und einer Temperatur zwischen 80° und dem Siedepunkt von Wasser - so auf Brühdruck- und Temperatur abgestimmt sind, dass eine plastische Verformung der Kapsel möglich ist, kann das auch für ein festes Halten der Kapsel während des Brühprozesses und danach bis zum Auswerfen ausgenützt werden. Aufgrund des Innendruchs ergeben sich nämlich kleine Wölbungen zwischen Dichtungslippen oder -wülsten in die umlaufenden Hohlräume hinein, was gegen ein axiales Herausrutschen der Kapsel stabilisierend wirkt.

Kapseldichtungen können auch beidseitig vorhanden sein, d.h. nebst auf der Seite des Injektors auch auf der Seite der Ausleitvorrichtung. In Ausführungsformen ist der injektorseitige Dichtungskragen jedoch ausgedehnter und/oder es weist die injektorseitige Kapseldichtung mehr Dichtungslippen auf als die extraktionsseitige Kapseldichtung . Daher wird im Allgemeinen bei diesen Ausführungsformen auch die Kapsel auf der Injektorseite mit grösserer Reibungskraft gehalten als auf der Extraktionsseite.

Die Kapsel kann eine fast beliebige auf die Brühkammer abgestimmte Form haben. Besonders günstig ist die Erfindung in Bezug auf Kapseln ohne einen umlaufenden Kragen der Kapsel in einer der Deckflächen, wie er von den meisten auf dem Markt erhältlichen Produkten bekannt ist. Ein solcher umlaufender Kragen ist zwar nach wie vor möglich aber nicht mehr notwendig. Kapselformen ohne umlaufenden Kragen sind sogar besonders bevorzugt. Als Folge davon kommen auch Kapselformen in Betracht, die nicht mehr durch einen umlaufenden Kragen anisotrop versteift werden, was mehr Freiheitsgrade ermöglicht.

Besonders günstig ist die Erfindung im Zusammenhang mit einer Kapsel, welche im Wesentlichen die Form eines geraden Zylinders (im weiteren Sinn, d.h. gemäss der geometrischen, nicht auf Rotationszylinder eingeschränkten Definition des Begriffs 'Zylinder') aufweist, d.h. eine die Deckflächen sind im Wesentlichen eben und ungefähr gleich, die umlaufende Mantelfläche steht ungefähr senkrecht auf den Deckflächen. Das schliesst eine Neigung der Mantelfläche zur Senkrechten auf die Deckfläche von bspw. maximal 3°, insbesondere maximal 2° oder maximal 1.5° nicht aus. Ebenfalls nicht ausgeschlossen ist das Vorhandensein einer herstellungstechnisch bedingten, im Bereich der Mantelfläche umlaufenden Schweissbraue. Die Kapsel kann trotzdem herstellungstechnisch bedingte umlaufende Ränder (bspw. eine Schweissbraue) aufweisen kann, die bspw. maximal 1.5 mm oder 1 mm oder weniger seitlich hervorstehen und die bspw. von einer Endflächen-Ebene abgesetzt sind.

Für viele Anwendungen bevorzugt ist eine im Querschnitt senkrecht zur Achse polygonale, insbesondere rechteckige Form der Kapsel, bspw. eine im Wesentlichen würfelförmige Kapsel. Die bereits anderswo beschriebenen Vorteile dieser Form in Bezug auf Logistik werden - durchaus überraschend - ergänzt durch eine verbesserte Stabilität beim Brühprozess unter seitlichem Halten durch die elastische Dichtung und unter plastischer Verformung der injektionsseitigen Deckfläche. Die Seitenkanten wirken während der Kompression durch die Brühflüssigkeit auf positive Weise stabilisierend, was in Versuchen anhand der nach dem Brühprozess resultierenden Kapselform verifiziert werden konnte.

Die Ausgestaltung und Anordnung der Perforationselemente kann auf verschiedene Art geschehen, wobei für gewisse Konfigurationen durch folgende, unabhängig voneinander oder in Kombination realisierbare Merkmale eine Optimierung erfolgen kann:
- Anordnung der injektionsseitigen Perforationselemente nahe der führenden Partie der Kapseldichtung, d.h. in Bezug auf die injektionsseitige Deckfläche peripher. Das wirkt beim Anstechen mechanisch stabilisierend, d.h. das Kapselmaterial kann weniger ausweichen; ausserdem wird so eine gute Durchtränkung des Extraktionsguts gewährleistet. Insbesondere können bei einer rechteckigen Grundfläche vier injektionsseitige Perforationselemente vorhanden sein, an jeder Ecke der Grundfläche eines;
- Anordnung der extraktionsseitigen Perforationselemente näher bei der Achse, d.h. weniger peripher als die der injektionsseitigen Perforationselemente. Dadurch kann unterstützt werden, dass die extraktionsseitigen Perforationselemente vor dem Brühvorgang die Kapsel nur teilweise (oder gar nicht) anstechen und erst durch den ansteigenden Kapselinnendruck ein vollständiges Öffnen der Ausleitöffnungen extraktionsseitig stattfindet.

- Dimensionierung der injektionsseitigen Perforationselemente in Relation zu den extraktionsseitigen Perforationselementen so, dass die injektionsseitigen Perforationselemente eine grössere axiale Ausdehnung (bspw. Abstand der Spitze von der Auflagefläche, senkrecht zu dieser gemessen) haben.
- Vorsehen einer Durchleitöffnung für jedes Perforationselement, insbesondere im Bereich, der von den Perforationselementen aufgespannt wird (in einer Projektion auf die Auflagefläche spannen die Perforationselemente bei einer zweidimensionalen Schnittlinie eine Fläche auf, was in PCT/CH2010/000098 ausführlich beschrieben wird; in dieser Konfiguration ergibt sich auch ein durch den Rückhaltesteg anhebbarer Lappen). Ein Rückhaltesteg erstreckt sich mit Vorteil über die Durchleitöffnung hinweg

Als besonders vorteilhaft erweist sich bei einigen Ausführungsformen eine Höhe der injektionsseitigen Perforationselemente von zwischen 110% und 160% der Höhe der extraktionsseitigen Perforationselemente. Der Abstand der injektionsseitigen Perforationselemente von der zentralen Achse entspricht bspw. zwischen 110% und 150% des Abstandes der extraktionsseitigen Perforationselemente von der zentralen Achse.

Bei ungefähr würfelförmigen Kapseln der Grösse zwischen 25 mm und 30 mm (Kantenlänge) ist eine optimale Höhe der injektionsseitigen Perforationselemente zwischen 6 mm und 10 mm, insbesondere zwischen 7 mm und 9 mm. Wenn die Perforationselemente die Form von zwei im Winkel zueinander stehenden Platten (Blechen) haben, ist die Ausdehnung der Platten in der Auflagefläche bevorzugt etwas kleiner als die Höhe, bspw. zwischen 4 und 7 mm. Die Höhe der extraktionsseitigen Perforationselemente kann zwischen 5 mm und 8 mm sein, die Ausdehnung von die Perforationselemente bildenden Platten zwischen 3 mm und 6 mm. Der Abstand der injektionsseitigen Perforationselemente von der zentralen Achse kann zwischen 10 und 17 mm betragen, der Abstand vom Rand der injektionsseitigen Deckfläche (d.h. zur durch die umlaufende Wandfläche definierten Ebene, gemessen senkrecht zur Ebene) zwischen 3 mm und 7 mm.

Bei grösseren Kapseln mit Kantenlängen bis 35 mm oder grösser kann die Dimensionierung gleich sein, oder die Perforationselemente können leicht grösser gewählt sein.

Weiter wird auch ein Zubereitungssystem für ein Brüherzeugnis - bspw. ein Kaffeekapselsystem mit Kaffeemaschine - beschrieben, wobei die Maschine zum Zubereiten des Brüherzeugnisses eine Brühkammer aufweist, die in der vorstehend dargelegten Art auf die Kapsel abgestimmt ist.

In Ausführungsformen umschliesst dabei die Brühkammer im geschlossenen Zustand die Kapsel vollständig, Injektor und Ausleitvorrichtung weisen Elemente auf, die passgenau einander entsprechen und in der geschlossenen Stellung zusammen die Brühkammer bilden. Die Wandungen in axialer Richtung (bezogen auf die Führung der Brühflüssigkeit und/oder auf die Bewegungsrichtung der relativen Bewegung der Brühmodulteile) bilden beispielsweise eine Injektorplatte mit der mindestens einen injektionsseitigen Perforationsspitze und eine Ausleitplatte mit der von dem von der Platte in die Brühkammer hinein ragenden extraktionsseitigen Perforationselement. Die oberen, unteren und seitlichen Wandungen werden durch entsprechende aneinander stossende Wandungsteile des Injektors und der Ausleitvorrichtung gebildet. Die entsprechenden Wandungsteile können in der geschlossenen Position gegeneinander abgedichtet sein, bspw. durch eine umlaufende Formdichtung. Diese Dichtung kann bspw. eine Lippendichtung aufweisen, welche an einem der Brühmodulteile befestigt ist und beim Verschliessen der Brühkammer gegen eine Fläche des anderen Brühmodulteils anstösst. Eine dergestalt abgeschlossene Brühkammer ermöglicht ein Spülen des Extraktionsgeräts bzw. des Brühmoduls, ohne dass eine Kapsel eingelegt werden müsste - was für den Benutzer ein markanter Vorteil ist. Dies schliesst jedoch die Verwendung einer Spül- oder Platzhalterkapsel während des Spül- oder Reinigungsvorgangs - mit abgeschlossener oder nicht vollständig abgeschlossener Brühkammer - nicht aus.

Ausführungsbeispiele der Erfindung werden nachfolgend anhand von Zeichnungen beschrieben. In den Zeichnungen bezeichnen gleiche Bezugszeichen gleiche oder analoge Elemente. Die Zeichnungen sind nicht massstäblich und zeigen teilweise einander entsprechende Elemente in von Figur zu Figur unterschiedlichen Grössen. Es zeigen:
- Figur 1 eine Kapsel;
- Figur 2 einen Ausschnitt aus einer Schnittdarstellung eines Brühmoduls;
- Figur 3 eine Brühsiebplatte mit Perforationselementen;
- Figur 4 injektionsseitige Perforationselemente mit einem Träger;
- Figur 5 ein Detail mit Kapseldichtung, Anstechplatte und (teilweise dargestellter) Kapsel;
- Figur 6 einen Schnitt entlang der Linie VI-VI in Fig. 7 durch eine Kapsel nach dem Brühprozess;
- Figur 7 eine Ansicht von der Injektionsseite her auf eine Kapsel nach dem Brühprozess;
- Figur 8 eine Ansicht von Innen auf eine angestochene Kapselwand;
- Figur 9 ein Schema einer Kaffeemaschine.

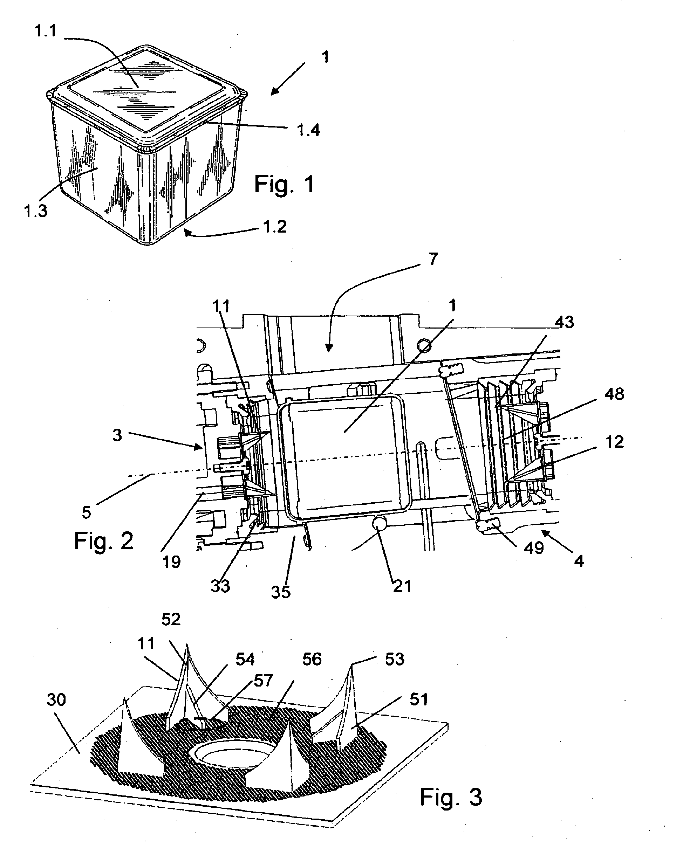

Die Kapsel 1 gemäss **Figur 1** hat im Wesentlichen die Form eines Würfels mit gerundeten Kanten, so dass die Kapselwand zwei Deckflächen 1.1, 1.2 (die eine, in Fig. 1 unterseitige Deckfläche ist wegen der in der Figur gewählten Orientierung nicht sichtbar) und eine umlaufende Mantelfläche 1.3 definiert ist. Die in der Figur oben liegende Seite ist jedoch etwas grösser als die Unterseite, so dass die Kapsel streng mathematisch gesehen eine Pyramidenstumpfform hat. Der Neigungswinkel der in der Figur seitlichen Flächen gegenüber der Senkrechten zur Grundfläche - gemeint ist natürlich diejenige zur Grundfläche senkrechte Ebene, die durch die Kante zwischen der Grundfläche und der entsprechenden seitlichen Fläche verläuft - ist sehr klein, er beträgt vorzugsweise höchstens 2° zum Beispiel nur ca. 1°. Ausserdem entspricht die Höhe der Kapsel über der Grundfläche näherungsweise der Länge der Grundflächenkanten. Sichtbar ist auch eine Schweissbraue 1.4, die allseits um maximal ca. d=0.6 mm seitlich vorsteht, also maximal um ca. 2-3% der Würfel-Kantenlänge.

Wie an sich bekannt ist die Kapselwand hier aus einem geeigneten Kunststoffmaterial gefertigt, bspw. aus Polypropylen mit einer Wandstärke von 0.1 mm und 0.5 mm, vorzugsweise zwischen 0.2 mm und 0.4 mm, bspw. zwischen 0.25 mm und 0.35 mm. Auch andere Materialien sind denkbar, insbesondere andere lebensmittelverträgliche Kunststoffe. In die Kapselwand ist eine Sperrschicht eingearbeitet, die eine Barriereneigenschaft für Sauerstoff hat und eine Diffusion von Sauerstoff in die Kapsel verhindert. Die Sperrschicht weist bspw. ein EthylenVinylalkohol-Copolymer (EVOH) auf. Die Kapselwand kann aus einem Grundkörper und einem Deckel zusammengesetzt sein, die je im Tiefziehverfahren hergestellt sind; das Verschliessen der Kapsel kann im Ultraschall-Trennschweissverfahren erfolgt sein. Eine Charakteristik ist auch, dass die Schweissbraue nicht in der Ebene einer der Deckflächen ist, sondern axial zu dieser versetzt.

Die Wandstärke der äusseren Wand ist bspw. auf allen Seiten ungefähr gleich. Die äussere Länge der Würfelkanten beträgt beispielsweise zwischen 24 und 30 mm, für eine Füllmenge von zwischen ca. 6 g und ca. 10 g Kaffee bzw. zwischen 30 mm und 35 mm für eine Füllmenge von zwischen ca. 9 g und ca. 14 g Kaffee. Die Kapsel kann so ausgebildet sein, dass sie nur aus der Wand und dem direkt an die Wand anstossende Füllung (ohne Filtermittel oder dergleichen) besteht, oder sie kann auch komplizierter aufgebaut und in der Kapsel vorhandene Filtermittel, Flüssigkeitsflusslenkmittel oder anderes aufweisend.

Betreffend die Kapsel-Aussenwand und betreffend Verfahren zu dessen Herstellung wird auch auf die internationale Patentanmeldung PCT/CH2010/000097 Bezug genommen.

Wie nachstehend noch erläutert wird, ist für die hier beschriebene Ausfiihrungsform das Brühmodul so auf die Schweissbraue 1.4 abgestimmt, dass die Orientierung der Kapsel im Brühmodul definiert ist. Dabei ist die in der Figur oberseitige Deckfläche die extraktionsseitige Deckfläche, und die in der Figur unterseitige Deckfläche 1.2 ist die injektionsseitige Deckfläche. Die übrigen vier Würfelseitenflächen bilden zusammen die umlaufende Mantelfläche 1.3. Diese Terminologie wird im Folgenden beibehalten. Die Erfindung kann jedoch auch ausgeführt werden, wenn:
- die Orientierung anders gewählt wird, bspw. umgekehrt, indem die ober- und die unterseitige Deckfläche der injektions- bzw. extraktionsseitigen Deckfläche entsprechen;
- die Orientierung im Brühmodul gar nicht vorgegeben ist, sondern ein Einwurf in beliebiger Orientierung erfolgen kann;
- die Form keine Würfelform sondern bspw. eine Zylinderform oder eine andere Form mit zwei Deckflächen und einer dazwischen umlaufenden Mantelfläche ist; und/oder
- mindestens eine der Deckflächen (insbesondere die extraktionsseitige Deckfläche) nicht eben ist sondern eine andere Form, bspw. eine Wölbung oder ähnlich aufweist.

Die hier beschriebene Konfiguration mit einer näherungsweisen Würfel- oder anderen Quaderform und mit der Anordnung so, dass eine umlaufende Schweissbraue 1.4 oder eine andere Verdickung näher bei der extraktionsseitigen Deckfläche als bei der injektionsseitigen Deckfläche ist, ist jedoch in einigen Konstellationen von Vorteil, insbesondere auch weil die Schweissbraue 1.4 eine Verdickung bildet, welche die Kapsel extraktionsseitig mechanisch stabilisiert.

**Figur 2** zeigt in einer Schnittdarstellung ein noch offenes Brühmodul mit eingeworfener Kapsel 1. Das Brühmodul weist eine Ausleitvorrichtung 3 und einen Injektor 4 auf. Ausleitvorrichtung 3 und Injektor 4 sind durch Betätigung eines geeigneten Mechanismus - bspw. mit Bedienhebel - zueinander verschiebbar. In der gezeichneten Ausführungsform ist der Injektor 4 in Richtung der Ausleitvorrichtung 3 verschiebbar, während letztere relativ zum äusseren Gehäuse unbeweglich ist.

Im Betriebszustand dient das Brühmodul als horizontales Brühmodul einer Kaffeemaschine, welche nebst dem Brühmodul einen Wassertank, eine Wasserheizungsvorrichtung (bspw. Durchlauferhitzer) und eine Pumpe zum Zuführen von Brühwasser zum Injektor 4 aufweist. Die Kapsel 1 kann durch eine Einwurföffnung 7 im äusseren Gehäuse in die Brühkammer eingeworfen werden. Nach dem Einwurf liegt die Kapsel 1 wie in Figur 2 abgebildet auf einem Auflageelement 21 sowie einer Auflagefläche 35 der Ausleitvorrichtung 3 auf. Durch Verschliessen der Brühkammer wird das Auflageelement 21 von der in Figur 2 abgebildeten Stellung weg verschoben, was in der europäischen Patentanmeldung 12 405 010.5 eingehender beschrieben ist.

Wie in Figur 2 ersichtlich ist das Brühmodul so ausgebildet, dass die axiale Richtung - die Injektor und Ableitvorrichtung verbindende Achse 5, entlang derer das bewegbare Brühmodulteil (d.h. hier der Injektor) beim Öffnen und Verschliessen der Brühkammer bewegt wird - leicht, bspw. um ca. 5°, gegenüber der Horizontalen geneigt ist, zwar so, dass das bewegbare Brühmodulteil (d.h. hier der Injektor) sich leicht nach unten bewegt, wenn es sich auf sich auf das ortsfeste Brühmodulteil (d.h. hier die Ausleitvorrichtung) zubewegt.

Der Injektor weist mindestens ein Perforationselement 12 (im dargestellten Ausführungsbeispiel vier Perforationselemente) mit zugeordneter Zuführöffnung auf, so dass die Kapsel angestochen und durch die Zuführöffnung mit der Brühflüssigkeit versorgt werden kann. Die Kaffeemaschine weist weiter bspw. einen unterhalb der Brühkammer angeordneten Kapselbehälter auf, in welchen die Kapsel nach dem Brühvorgang durch Anheben des Bedienhebels selbsttätig ausgeworfen wird.

Auch die Ausleitvorrichtung 3 weist einen die Auflagefläche definierenden Träger und eine Mehrzahl von von diesem weg ragenden Perforationselementen 11 mit je einer zugeordneten Durchleitöffnung auf. Über einen Ausleitkanal 19 kann das Brüherzeugnis abfliessen.

Der Injektor 4 weist eine Kapseldichtung 43 mit einem Dichtungskragen auf, der beim Verschliessen der Brühkammer die Kapsel umgreifend hält. Auch die Ausleitvorrichtung 3 ist mit einer Kapseldichtung 33 versehen, an der ein Dichtungskragen ausgebildet ist.

Die die Brühkammer bildenden Teile des Injektors und der Ausleitvorrichtung sind so aufeinander abgestimmt, dass sie passgenau einander entsprechen und bilden in der geschlossenen Stellung zusammen die Brühkammer. Die oberen, unteren und seitlichen Wandungen werden durch entsprechende aneinander stossende Wandungsteile des ersten und des zweiten Brühmodulteils gebildet. Die vom Injektor 4 gebildeten Wandungsteile und die von der Ausleitvorrichtung 3 gebildeten Wandungsteile sind in der geschlossenen Position durch eine umlaufende Formdichtung 49 gegeneinander abgedichtet. Im geschlossenen Zustand der Brühkammer ist so die Brühkammer zusätzlich zur Wirkung der Kapseldichtungen gegen aussen abdichtet. Das ermöglicht bspw. einen Spülprozess ohne eingelegte Kapsel.

**Figur 3** zeigt die extraktionsseitigen Perforationselemente 11 mit dem Träger 30 in der Form einer Brühsiebplatte. Diese Brühsiebplatte mit Perforationselementen ist in der Publikation WO 2010/118544 beschrieben. In Figur 3 sieht man, dass jedes Perforationselement aus zwei zueinander im Winkel stehenden zu einer Perforationsspitze 53 hin zulaufenden Blechstücken 51 aufgebaut sind. Die vom Träger weg ragende Kante ist jeweils als Schneidekante 52 ausgebildet, so dass nach einer Perforation der Kapselwand durch die Perforationsspitze 53 durch weiteres Eindrücken der Perforationselemente in die Kapsel eine einen Winkel bildende (daher zweidimensionale) Schnittlinie in der Kapselwand entsteht. Jedes Perforationselement weist weiter einen Rückhaltesteg 54 auf, der in axialer Richtung weniger weit in die Kapsel hinein ragt als die Perforationsspitze und welche eine nicht schneidende Kante aufweist. Jedem Perforationselement ist eine in der Figur nur für ein Perforationselement schematisch gestrichelt dargestellte Durchleitöffnung 57 zugeordnet, über die sich bspw. der Rückhaltesteg erstreckt. Die Durchleitöffnungen werden durch die Mikrosiebfolie 56 überspannt, welche wie in WO 2010/118544 beschrieben die Funktion eines Siebes ähnlich wie bei einer Vollautomaten-Kaffeemaschine haben. Die Mikrosiebfolie 56 ist hier optional.

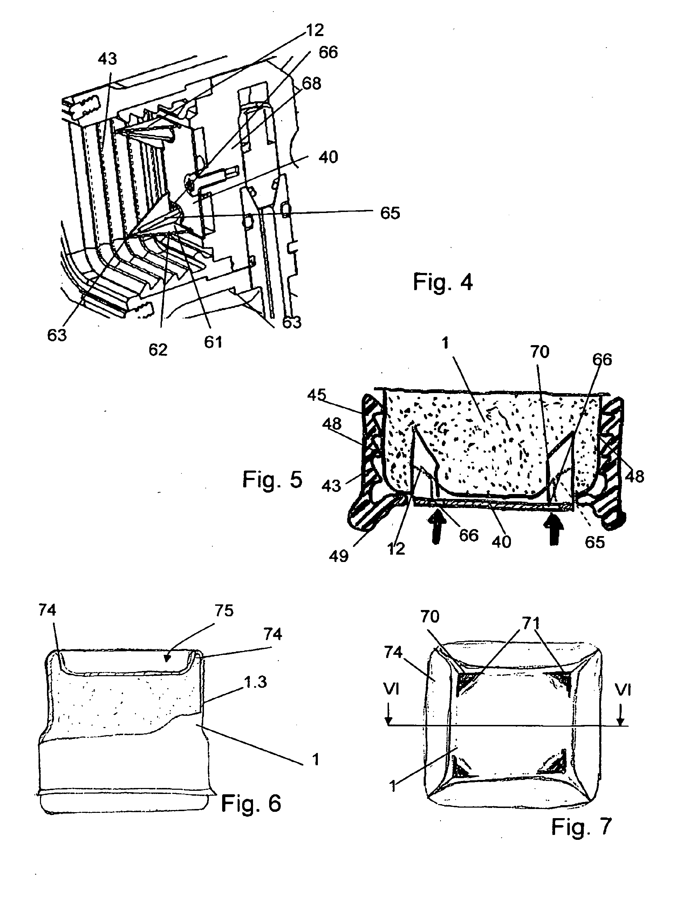

Die injektionsseitigen Perforationselemente 12 mit ihrem Träger 40 sind in **Figur 4** dargestellt. Auch die injektionsseitigen Perforationselemente weisen je zwei zueinander im Winkel stehenden zu einer Perforationsspitze 63 hin zulaufenden Blechstücke 61 mit Schneidekante 62 auf. Auch ein zugeordneter Rückhaltesteg 65 ist vorhanden. Wie das auch für die Extraktionsseite eine Option ist, können die Blechstücke 61 an einer Trägerplatte des Trägers befestigt sein, während die Rückhaltestege aus einem die Trägerplatte haltenden Brühmodulkörper 68 ausgebildet sind und durch entsprechende Öffnungen der Trägerplatte in axiale Richtung in die Brühkammer hinein ragen. In Figur 4 sieht man auch deutlich die Durchleitöffnungen 66, die im vom den Blechstücken 61 teilweise umfassten Bereich der Trägerplatte ausgebildet sind.

**Figur 5** zeigt ein Detail des Aufbaus vor dem Einsetzen des Brühprozesses. Dargestellt sind die injektionsseitige Kapseldichtung 43, der Träger 40 mit den injektionsseitigen Perforationselementen 12 und ein Teil der Kapsel nach dem Verschliessen der Brühkammer. Der Brühmodulkörper 68 ist in Fig. 5 nicht dargestellt. Beim Verschliessen der Brühkammer umgreift der umlaufende Kragen 45 der Kapseldichtung die Kapsel 1 so, dass aufgrund ihrer Elastizität Dichtungslippen 48 oder Dichtungswülste von seitlich gegen die Kapselwand gedrückt werden. Die Perforationselemente 12 perforieren die injektionsseitige Deckfläche der Kapsel und werden in diese hineingedrückt.

Die Brühkammer ist so ausgebildet und in ihrer Dimensionierung auf die Dimensionierung der Kaffeekapsel abgestimmt, dass bei vollständig verschlossener Brühkammer vor dem Einsetzen des Brühprozesses (d.h. bevor das heisse Wasser unter Druck eingeleitet wird) die injektions- und extraktionsseitigen Auflageflächen nicht beide an den entsprechenden Deckflächen der Kapsel anliegen. Der Abstand der Auflageflächen im geschlossenen Zustand der Brühkammer entspricht der Ausdehnung der Kapsel entlang der Achse 5 (entsprechend der Ausdehnung obenunten in Fig. 1) vor deren Einwurf in die Brühkammer, d.h. ohne dass von aussen eine Kraft angelegt ist. Der aufgrund der Materialzähigkeit vorhandene Widerstand gegen das Eindringen der Anstechspitzen bewirkt eine leichte Verformung der Kapsel so, dass mindestens eine der Deckflächen nicht an der entsprechenden Auflagefläche anliegt.

In der Darstellung gemäss Figur 5 ist injektionsseitig ein gewisser Zwischenraum zwischen Träger 40 und der injektionsseitigen Deckfläche der Kapsel sichtbar; auch extraktionsseitig wird ein solcher Zwischenraum gebildet, wobei aufgrund der Dimensionierung und/oder Anordnung extraktionsseitig die Kapsel bspw. nur so weit angestochen wird, dass die Perforationselemente nur eine Schnittlinie erzeugen, die Rückhaltestege jedoch noch nicht ins Kapselinnere ragen.

In der Konstellation gemäss Figur 5 sind die injektionsseitigen Perforationselemente 12 jedoch so weit in die Kapsel eingedrungen, dass aufgrund der Wirkung der Rückhaltestege 65 jeweils ein durch die zweidimensionale Schnittlinie erzeugter Lappen 70 des Kapselwandmaterials ins Kapselinnere gedrückt wird; ohne die Rückhaltestege würde dies (erst) durch den Flüssigkeitsdruck geschehen.

Beim Brühprozess wird die heisse Brühflüssigkeit unter Druck durch die Durchleitöffnungen 66 eingeleitet. Dies steht im Unterschied zu Ansätzen gemäss dem Stand der Technik, bei welchen die Brühflüssigkeit durch die Perforationselemente selbst geleitet wird und so direkt ins Kapselinnere gelangt. Beim Ansatz gemäss des vorliegenden Aspekts der Erfindung baut sich hingegen aufgrund der beschränkten Durchleitkapazität der Öffnungen in der Kapselwand zunächst ein Druck von aussen auf diese auf, wobei Flüssigkeit in den Zwischenraum zwischen Träger 40 und Kapselwand gelangt, so dass der Druck flächig auf die Kapselwand wirkt. Gleichzeitig wird aufgrund der erhöhten Temperatur der Brühflüssigkeit die plastische Verformbarkeit der Kapselwand erhöht (die Glasübergangstemperatur von Polypropylen liegt bei ca. 0° oder knapp darunter). Dadurch wird die Kapselwand zusätzlich nach innen gedrückt, was den Kapselinhalt komprimiert und kompaktiert, bevor grössere Flüssigkeitsmengen in die Kapsel eingedrungen sind. Diese Wölbung wird möglich aufgrund der stabilisierenden Wirkung der umgreifenden Kapseldichtung 43 (bzw. des umgreifenden Dichtungskragens 45), welche die umlaufende Wand an Ort und Stelle hält.

Nach einiger Zeit (im Allgemeinen nach 1 s bis wenige Sekunden) baut sich auch im Kapselinnneren durch die nun in grösseren Mengen in die Kapsel eingedrungene Brühflüssigkeit ein Überdruck auf, und es findet Ausgleich des Drucks zwischen Kapselinnerem und Injektor statt. Zu diesem Zeitpunkt hat im Kapselinneren eine Vorbrühprozess eingesetzt, indem das nun kompakte und vor Verwirbelungen geschützte Extraktionsgut mit der Brühflüssigkeit getränkt ist. Aufgrund des grösseren Kapselinnendrucks wird dafür extraktionsseitig die Deckfläche leicht nach aussen gedrückt und flächig gegen die Brühsiebplatte gepresst, wodurch die Kapselwand extraktionsseitig zur extraktionsseitigen Auflagefläche hin gedrückt wird. Als Folge davon dringen die extraktionsseitigen Perforationselemente (die bspw. weniger peripher in Bezug auf die Achse 5 angeordnet sind als die injektionsseitigen Perforationselemente, wodurch die Wölbung dort stärker wirkt) weiter in die Kapsel ein, bis die von den Perforationselementen erzeugten Lappen durch die Rückhaltestege markant von der Deckfläche nach innen angehoben werden und so eine Ausleitöffnung freigeben, durch die das nun gebrühte Brüherzeugnis aus der Kapsel abfliesst.

**Figuren 6 und 7** zeigen in einer Schnittdarstellung bzw. in Ansicht von der Injektionsseite her die Form der Kapsel, Man sieht deutlich die Wölbung nach Innen, so dass ein um ein Kompressionsvolumen 75 verringertes Kapselvolumen entsteht. Im Randbereich sind aufgrund der Wirkung des umgreifenden Dichtungskragens Rippen 74 entstanden. Die injektionsseitigen Öffnungen 71 in der Kapselwand sind in den Figuren ebenfalls dargestellt.

Wie man in Fig. 6 besonders gut sieht, ist die Kapsel nach dem Brühprozess so verformt, dass die umlaufende Mantelfläche 1.3 durch die Wirkung der umgreifenden Dichtung injektionsseitig leicht zusammengedrückt ist, während sie extraktionsseitig aufgrund des Kapselinnendrucks leicht erweitert ist. Injektionsseitig kann die umlaufende Mantelfläche ausserdem als Abdruck der Dichtung mit den mehreren Dichtungslippen 48 leicht gerippt sein.

Von der Ausleitöffnung gelangt aus der Kapsel austretender Kaffee (oder dergleichen) über geeignete Kanäle zu einer Austrittsöffnung, von wo aus er in die bereitgestellte Tasse fliessen kann.

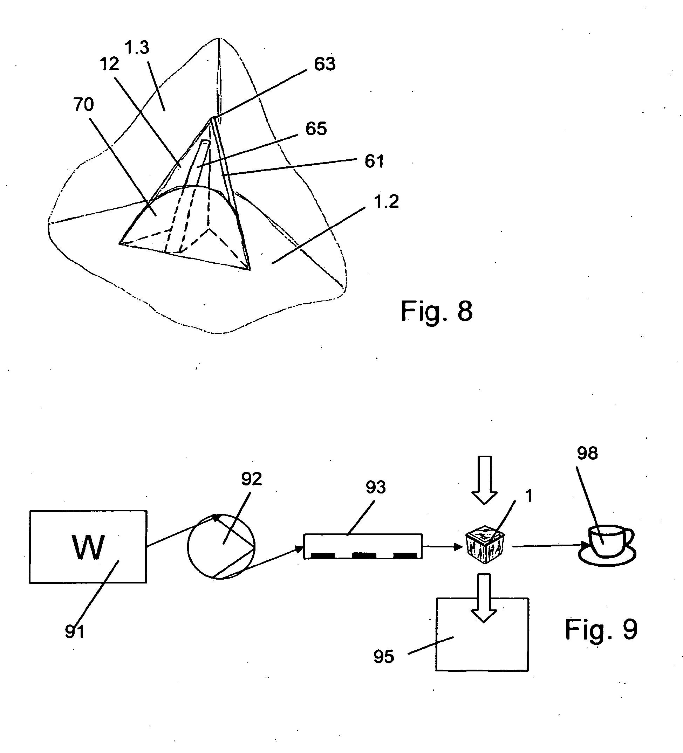

**Figur 8** zeigt in einer Ansicht von Innen (ohne Extraktionsgut) die angestochene injektionsseitige Deckfläche 1.2 der Kapsel. Man sieht den Lappen (70), wie er auch durch die Wirkung des Rückhaltestegs 65 aus der Deckflächen-Ebene heraus nach innen gedrückt ist und so zwischen Kapselwand und perforierenden Messern (Blechstücken 61) eine Öffnung freihält; ein ähnlicher Effekt tritt extraktionsseitig auf, wobei dort die stabilisierende Wirkung der umgreifenden Dichtung entfällt.

Eine erfindungsgemässe Kaffeemaschine mit einem Brühmodul weist, wie in **Figur 9** schematisch dargestellt, nebst dem Brühmodul einen Wassertank 91, eine Pumpe 92 zum Zuführen von Brühwasser zum Injektor 4 und eine Wasserheizungsvorrichtung 93 (bspw. Durchlauferhitzer) auf. Unterhalb des Brühmoduls ist ein Kapselbehälter 95 angeordnet, in welchen die Kapseln 1 nach dem Brühprozess fallen bzw. transportiert werden. Das Bezugszeichen 98 bezeichnet eine Kaffeetasse.

Abschliessend sei noch erwähnt, dass die Anwendung des erfindungsgemässen Vorgehens nicht auf das Brühen von Kaffee beschränkt ist. Auch andere Brühgetränke, insbesondere Tee, oder weitere Brüherzeugnisse können mit dem hier beschriebenen Verfahren und/oder mit den hier beschriebenen Mitteln hergestellt werden.

## Patentansprüche

1. Brühverfahren, bei aus einer in eine Kapsel (1) eingeleitete Brühflüssigkeit in einem Extraktionsprozess ein Brüherzeugnis erzeugt wird, mit folgenden Schritten:
- zur-Verfiigung-Stellen der Kapsel (1) als eine geschlossene Kapsel mit einer Kapselwand, die eine extraktionsseitige Deckfläche (1.1), eine injektionsseitige Deckfläche (1.2) und eine umlaufende, sich zwischen der extraktionsseitigen Deckfläche und der injektionsseitigen Deckfläche erstreckende Mantelfläche (1.3) aufweist, sowie mit einem von der Kapselwand umgebenen Extraktionsgut im Innern der Kapsel;
- Einbringen der Kapsel (1) in ein Brühmodul einer Maschine zum Zubereiten des Brüherzeugnisses, welches Brühmodul einen Injektor (4) zum Einleiten einer Brühflüssigkeit in die Kapsel und eine Ausleitvorrichtung (3) zum Ausleiten eines Brüherzeugnisses aufweist, wobei der Injektor mindestens ein von einer injektionsseitigen Auflagefläche weg ragendes injektionsseitiges Perforationselement (12) und die Ausleitvorrichtung mindestens ein von einer extraktionsseitigen Auflagefläche weg ragendes extraktionsseitiges Perforationselement (11) aufweist,
- Schliessen einer Brühkammer des Brühmoduls, so weit, bis sich die Kapsel in der Brühkammer befindet, die umlaufende Mantelfläche der Kapsel injektionsseitig durch eine Kapseldichtung (43) umgriffen wird, und das mindestens eine injektionsseitige Perforationselement (12) die injektionsseitige Deckfläche (1.2) entlang einer Schnittlinie ansticht,
- Einleiten einer Brühflüssigkeit in den Bereich zwischen die injektionsseitige Auflagefläche und die injektionsseitige Deckfläche (1.2) unter Druck, so, dass durch den Flüssigkeitsdruck die injektionsseitige Deckfläche zum Kapselinnern hin gedrückt wird und sich mindestens teilweise zum Kapselinnern hin verschiebt, während die umgreifende Kapseldichtung (43) die umlaufende Mantelfläche (1.3) hält, und so dass Brühflüssigkeit an mindestens einer ins Kapselinnere gedrückten injektionsseitigen Partie (70) der Kapselwand vorbei ins Kapselinnere gelangt, und
- Aufrechterhalten des Drucks auf die Brühflüssigkeit mindestens so lange, bis das Brüherzeugnis aus mindestens einer in der extraktionsseitigen Deckfläche durch Anstechen durch das mindestens eine extraktionsseitige Perforationselement erzeugten Ausleitöffnung austritt.

2. Verfahren nach Anspruch 1, wobei das Brühmodul und die Kapsel (1) so dimensioniert sind, dass vor dem Einleiten der Brühflüssigkeit die Deckflächen (1.1, 1.2) nicht beide an den Auflageflächen anliegen.

3. Verfahren nach Anspruch 2, wobei nach dem Einleiten der Brühflüssigkeit der Druck auf die Brühflüssigkeit so lange aufrecht erhalten wird, bis die extraktionsseitige Deckfläche (1.2) durch einen in der Kapsel (1) aufgebauten Innendruck zur extraktionsseitigen Auflagefläche hin verschoben wird, so dass durch die extraktionsseitigen Perforationselemente (11) Ausleitöffnungen in der Kapsel erzeugt werden, durch welche das Brüherzeugnis aus der Kapsel ausleitbar ist.

4. Verfahren nach einem der vorangehenden Ansprüche, wobei das extraktionsseitige Perforationselement (11) bzw. die extraktionsseitigen Perforationselemente so gewählt wird/werden, dass jedes Perforationselement einen von der extraktionsseitigen Auflagefläche weg ragenden, nicht schneidenden extraktionsseitigen Rückhaltesteg (54) aufweist.

5. Verfahren nach Anspruch 4, wobei das Brühmodul und die Kapsel so dimensioniert und aufeinander abgestimmt sind, dass vor dem Einleiten der Brühflüssigkeit die extraktionsseitigen Rückhaltestege (54) im Wesentlichen nicht in das Kapselinnere ragen..

6. Verfahren nach einem der vorangehenden Ansprüche, wobei das mindestens eine injektionsseitige Perforationselement (12) eine grössere axiale Ausdehnung hat als das mindestens eine extraktionsseitige Perforationselement (11).

7. Verfahren nach einem der vorangehenden Ansprüche, wobei mehrere injektionsseitige Perforationselemente (12) und mehrere extraktionsseitige Perforationselemente (11) vorhanden sind, wobei die injektionsseitigen Perforationselemente einen grösseren Abstand von einer senkrecht auf die Auflageflächen stehenden Achse (5) haben als die extraktionsseitigen Perforationselemente.

8. Verfahren nach einem der vorangehenden Ansprüche, **dadurch gekennzeichnet, dass** als die umgreifende Kapseldichtung (43) eine Kapseldichtung aus einem elastomeren und/oder gummielastischen Material verwendet wird.

## Claims

1. A brewing method, with which a brewed product is produced in an extraction process from a brewing fluid introduced into a capsule (1), with the following steps:
- providing the capsule (1) as a closed capsule with a capsule wall comprising an extraction-side cover surface (1.1), an injection-side cover surface (1.2) and a peripheral, lateral surface (1.3) which extends between the extraction-side cover surface and the injection-side cover surface, as well as with an extraction material surrounded by the capsule wall, in the inside of the capsule;
- introducing the capsule (1) into a brewing module of a machine for preparing the brewed product, said brewing module comprising an injector (4) for introducing a brewing fluid into the capsule, and a discharge device (3) for discharging a brewed product, wherein the injector comprises at least one injection-side perforation element (12) which projects away from an injection-side support surface, and the discharge device comprises at least one extraction-side perforation element (11) which projects away from an extraction-side support surface,
- closing a brewing chamber of the brewing module so far until the capsule is located in the brewing chamber, the peripheral lateral surface of the capsule is encompassed at the injection side by a capsule seal (43), and the at least one injection-side perforation element (12) pierces the injection-side cover surface (1.2) along a cutting line,
- introducing a brewing fluid into the region between the injection-side support surface and the injection-side cover surface (1.2) under pressure, so that on account of the fluid pressure, the injection-side cover surface is pressed to the capsule interior and at least partly displaces to the capsule interior, whilst the encompassing capsule seal (43) holds the peripheral lateral surface (1.3), and so that brewing fluid gets past at least one injection-side portion (70) of the capsule wall which is pressed into the capsule interior, into the capsule interior, and
- maintaining the pressure on the brewing fluid at least until the brewed product exits out of at least one discharge opening which is produced in the extraction-side cover surface by way of piercing by the at least one extraction-side perforation element.

2. The method according to claim 1, wherein the brewing module and the capsule (1) are dimensioned such that the cover surfaces (1.1, 1.2) do not both bear on the support surfaces before the introduction of the brewing fluid.

3. The method according to claim 2, wherein after the introduction of the brewing fluid, the pressure on the brewing fluid is maintained until the extraction-side cover surface (1.2) is displaced to the extraction-side support surface by way of an inner pressure built up in the capsule (1), so that discharge openings are produced in the capsule by way of the extraction-side perforation elements (11), through which discharge openings the brewed product is dischargeable from the capsule.

4. The method according to one of the preceding claims, wherein the extraction-side perforation element (11) or the extraction-side perforation elements is/are selected such that each perforation element comprises a non-cutting, extraction-side retaining web (54) which projects away from the extraction-side support surface.

5. The method according to claim 4, wherein the brewing module and the capsule are dimensioned and are matched to one another such that the extraction-side retaining webs (54) essentially do not project into the capsule interior before the introduction of the brewing fluid.

6. The method according to one of the preceding claims, wherein the at least one injection-side perforation element (2) has a greater axial extension than the at least one extraction-side perforation element (11).

7. The method according to one of the preceding claims, wherein several injection-side perforation elements (12) and several extraction-side perforation elements (11) are present, wherein the injection-side perforation elements have a greater distance to an axis (5) which is perpendicular to the support surfaces, than the extraction-side perforation elements.

8. The method according to one of the preceding claims, **characterised in that** a capsule seal of an elastomeric and/or rubber-elastic material is used as the encompassing capsule seal (43).

## Revendications

1. Procédé d'infusion au liquide, dans lequel un produit d'infusion est formé dans une opération d'extraction à partir d'un liquide d'infusion introduit dans une capsule (1), le procédé présentant les étapes suivantes :
préparation de la capsule (1) en tant que capsule fermée
dotée d'une paroi de capsule qui présente une surface de recouvrement (1.1) située côté extraction, une surface de recouvrement (1.2) située côté injection et une surface périphérique d'enveloppe (1.3) qui s'étend entre la surface de recouvrement situé côté extraction et la surface de recouvrement située côté injection et
présentant un produit à extraire situé à l'intérieur de la capsule et entouré par la paroi de la capsule,
placement de la capsule (1) dans un module d'infusion au liquide d'une machine de préparation du produit d'infusion,
le module d'infusion au liquide présentant un injecteur (4) qui introduit un liquide d'infusion dans la capsule et un dispositif de sortie qui fait sortir le produit d'infusion,
l'injecteur présentant au moins un élément de perforation (12) situé du côté de l'injection et qui déborde d'une surface d'appui située côté injection,
le dispositif de sortie présentant au moins un élément de perforation (11) situé côté extraction et débordant d'une surface de pose située côté extraction,
fermeture d'une chambre d'infusion du module d'infusion jusqu'à ce que la capsule soit placée dans la chambre d'infusion, que la surface périphérique d'enveloppe de la capsule soit entourée du côté injection par un joint d'étanchéité (43) de capsule et que le ou les éléments de perforation (12) situés côté injection percent la surface de recouvrement (1.2) située côté injection le long d'une ligne de coupe,
introduction d'un liquide d'infusion dans la zone située entre la surface de pose située côté injection et la surface de recouvrement (1.2) située côté injection, sous une pression telle que la surface de recouvrement située côté injection soit repoussée en direction de l'intérieur de la capsule par la pression du liquide et se déplace au moins en partie vers l'intérieur de la capsule tandis que le joint d'étanchéité (43) qui entoure la surface périphérique d'enveloppe (3) la maintient, de telle sorte que le liquide d'infusion passe à l'intérieur de la capsule sur au moins une partie (70) de la paroi de capsule située côté injection et repoussée à l'intérieur de la capsule et
maintien de la pression du liquide d'infusion au moins jusqu'à ce que le produit d'infusion sorte par au moins une ouverture de sortie formée dans la surface de recouvrement située côté extraction par perforation à l'aide du ou des éléments de perforation situés côté extraction.

2. Procédé selon la revendication 1, dans lequel le module d'infusion et la capsule (1) sont dimensionnés de telle sorte que les surfaces de recouvrement (1.1, 1.2) ne reposent pas toutes deux sur les surfaces de pose avant l'introduction du liquide d'infusion.

3. Procédé selon la revendication 2, dans lequel après l'introduction du liquide d'infusion, la pression exercée sur le liquide d'infusion est maintenue jusqu'à ce que la surface de recouvrement (1.2) située côté extraction soit déplacée vers la surface de pose située côté extraction par la pression intérieure qui s'établit dans la capsule (1), de telle sorte que des ouvertures de sortie par lesquelles le produit d'infusion peut être sorti de la capsule soient formées dans la capsule par les éléments de perforation (11) situés côté extraction.

4. Procédé selon l'une des revendications précédentes, dans lequel l'élément de perforation (11) situé côté extraction ou les éléments de perforation situés côté extraction sont sélectionnés de telle sorte que chaque élément de perforation présente une nervure de retenue (54) située côté extraction, débordant de la surface de pose située côté extraction et non coupante.

5. Procédé selon la revendication 4, dans lequel le module d'infusion et la capsule sont dimensionnés et accordés l'un à l'autre de telle sorte que les nervures de retenue (54) situées côté extraction ne pénètrent essentiellement pas à l'intérieur de la capsule avant l'introduction du liquide d'infusion.

6. Procédé selon l'une des revendications précédentes, dans lequel le ou les éléments de perforation (12) situés côté injection présentent une extension axiale plus grande que le ou les éléments de perforation (11) situés côté extraction.

7. Procédé selon l'une des revendications précédentes, dans lequel plusieurs éléments de perforation (12) situés côté injection et plusieurs éléments de perforation (11) situés côté extraction sont prévus, les éléments de perforation situés côté injection présentant une plus grande distance par rapport à un axe (5) perpendiculaire aux surfaces de pose que les éléments de perforation situés côté extraction.

8. Procédé selon l'une des revendications précédentes, **caractérisé en ce qu'**un joint d'étanchéité de capsule en matériau élastomère et/ou en caoutchouc élastique est utilisé comme joint d'étanchéité (43) entourant la capsule.
